(19) Europäisches Patentamt
European Patent Office
Office européen des brevets

(11) **EP 2 692 071 B1**

(12) **EUROPEAN PATENT SPECIFICATION**

(45) Date of publication and mention
of the grant of the patent:
**12.06.2019 Bulletin 2019/24**

(21) Application number: **12714405.3**

(22) Date of filing: **22.03.2012**

(51) Int Cl.:
***H04B 7/155*** (2006.01)

(86) International application number:
**PCT/JP2012/058493**

(87) International publication number:
**WO 2012/133718 (04.10.2012 Gazette 2012/40)**

(54) **COOPERATIVE TRANSMISSION**

**KOOPERATIVE ÜBERTRAGUNG**

**TRANSMISSION COLLABORATIVE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2011 GB 201105487**

(43) Date of publication of application:
**05.02.2014 Bulletin 2014/06**

(73) Proprietor: **NEC Corporation
Tokyo 108-8001 (JP)**

(72) Inventor: **PANAITOPOL, Dorin
Reading
Berkshire RG2 0TD (GB)**

(74) Representative: **MacDougall, Alan John Shaw et al
Mathys & Squire LLP
The Shard
32 London Bridge Street
London SE1 9SG (GB)**

(56) References cited:
EP-A1- 1 924 009        WO-A1-2005/008947
WO-A2-2010/005951    US-A1- 2009 262 678

## Description

### Technical Field

The present invention relates to cooperative transmission in a wireless network, and in particularly but not exclusively to cooperative transmission in a network comprising a number of relay nodes. The invention has particular, but not exclusive, relevance to cooperative transmission in a cognitive radio network, or in a Long Term Evolution (LTE) communication network.

### Background Art

Cooperative transmission can be used to improve wireless network performance through diversity gain. Known cooperative transmission schemes include Amplify-and-Forward and Decode-and-Forward. Existing Amplify-and-Forward schemes fall into two categories, either:

(a) use multiple relays but in a non-incremental way, or
(b) use only a single relay in an incremental way.

For Amplify-and-Forward (AF) schemes, communication between a source node and a destination node happens in two phases. In the first phase, the source S broadcasts a signal. In the second phase, one or more relay nodes that have received (overheard) the signal will amplify and retransmit it to the destination. In simple (non-incremental) AF, the second phase always exists. In incremental relaying, the second phase exists only if the destination has not received the transmitted signal in the first phase.

A simple Amplify-and-Forward scheme is described in NPL 1. In the described scheme, a fixed timeslot is normally allocated to a selected relay to retransmit an overheard transmission to the intended destination, regardless of success or failure in the original transmission. This simple AF scheme does not provide good spectral efficiency as each transmission requires two timeslots even when the original transmission is successful.

It is noted that for reasons of mathematical simplification, the source and a single relay node are required to transmit at a data rate equal to twice the original data rate when there is relaying, so that the total transmission time with relaying equals the transmission time without relaying. However, this model is not very practical in real world implementations where the transmission data rate is generally fixed.

This simple scheme can be improved in terms of a lower outage probability by using multiple relays as described in NPL 2. In the scheme described by NPL 2, the multiple relays retransmit concurrently in a single time slot. However, this improvement does not help in achieving a higher spectral efficiency because each transmission still requires two time slots (or more) regardless of the success of the original transmission.

In NPL 3, a scheme that uses multiple relays incrementally at the same time was proposed. In this paper it was shown that non-incremental (simple) schemes do not provide a good spectral efficiency, and that using multiple relays incrementally can further improve diversity. According to the proposed method information can be transmitted from a Source to a Destination using simultaneous multiple-relays, incrementally. This paper also proposes a Maximum Ratio Combining (MRC) technique which maximises, at the destination, the signal to noise ratio (SNR) of the combined received information from the initial transmission from the Source and from any re-transmissions from the one or more Relays.

In the scheme described by NPL 3, the total transmission time with single or multiple relays is twice that of direct transmission, which is a more practical model when time slot duration cannot be changed instantaneously.

The scheme of NPL 3 increases the spectral efficiency of the transmission and has better performance in terms of outage probability as compared with the earlier simple AF schemes.

### Citation List

### Non Patent Literature

NPL 1: Laneman J. M. et al., "Cooperative diversity in wireless networks: Efficient protocols and outage behaviour", IEEE Trans. Inform. Theory, vol. 50, no. 12, pp. 3062-3080, Dec. 2004

NPL 2: Lee D, et al., "Amplify-and-forward Cooperative Transmission with Multiple Relays Using Phase Feedback", IEEE VTC, Sept 2006

NPL 3: Panaitopol D. et al., "An Efficient Cooperative Transmission Scheme Using Multiple Relays Incrementally", PIRMC 2010

WO 2005/008947 A1 discloses a protocol for forwarding data packets over a network. An originating transmitter sends a data packet over the network to a destination receiver. The packet is forwarded by one or more repeaters within the network. The repeaters assume responsibility for originating re-transmissions of the packet if the packet is not correctly received by the destination receiver (e.g. if a NACK signal is returned from the receiver or if no type of acknowledgement signal is returned from the receiver). Re-transmission of the packet by multiple repeaters effectively modifies the data paths by which the data packet travels to the receiver increasing probability that the packet gets through to the receiver. The transmitter may be configured not to respond to any NACK signals for packets it has sent, thereby transferring retransmission overhead and signalling overhead to the repeaters.

**Technical Problem**

However, there has been found problems that the proposed multiple-relaying incremental strategy cannot deal with situations in which a feedback signal from the destination node is lost.

If the feedback from the destination is lost, packet collisions may occur as the relays and the source may send different information in the same time slot. For example, the relay might decide to retransmit a first packet (or another previous transmitted packet) while the source transmits a second packet (or another different packet from the relay). Therefore, the method needs low-level coordination (control signalling) between the source and the relays in order to avoid packet collisions at the destination. However, in many cases such low-level coordination may not be possible, or may require a significant increase in complexity of the network to allow the required coordination information to be exchanged between the source and the relays.

Embodiments of the invention aim to at least partially address some of the problems with the prior art described above.

**Summary of Invention**

According to a first aspect of the invention, there is provided a wireless communication system comprising a source node, a destination node, and at least one relay node configured to transmit and receive in synchronized timeslots, wherein the source node is configured to transmit a first message to the destination node in a first timeslot; wherein the destination node is configured to receive the first message and to transmit an indication of whether the first message has been correctly received; wherein the at least one relay node is configured to operate in an incremental relaying manner by receiving and storing the first message transmitted by the source node, wherein when the at least one relay node does not receive the indication from the destination node or receives a positive indication from the destination node, the at least one relay node is configured not to transmit the first message; wherein when the source node receives a positive indication from the destination node, the source node is configured to transmit a second message in a subsequent timeslot; and wherein when a negative indication or no indication is received at the source node from the destination node and a negative indication is received at the at least one relay node from the destination node, the source node and the at least one relay node are configured to participate in a cooperative retransmission process in which: the source node is configured to retransmit the first message in the subsequent timeslot, or to perform neither retransmission of the first message nor transmission of said second message in the subsequent timeslot; and the at least one relay node is configured to transmit the first message in the subsequent timeslot.

The indication may comprise an ACK/NACK response from the destination node received at either the source node or at least one of the relay nodes.

The source node may be configured not to transmit in a next, or a subsequent, timeslot when a negative indication or no indication is received at the source node from the destination node. Alternatively, the source node may be configured to retransmit the first message in the next, or a subsequent, timeslot when a negative indication or no indication is received at the source node from the destination node.

The system may comprise a plurality of relay nodes that may be configured to re-transmit the first message in the next, or a subsequent, timeslot in response to the received negative indication from the destination node.

The destination node may be configured to perform maximum ratio combining on the first message and one or more copies of the retransmitted first message received at the destination node.

The system may comprise a wireless communication system according to the LTE standard, with the source node comprising an eNodeB, the at least one relay node comprising a LTE relay node, and the destination node comprising a user equipment. Alternatively or additionally, the wireless communication system could include a user equipment as the source node, a LTE relay node as the at least one relay node, and an eNodeB as the destination node.

Alternatively, the communication system may comprise a cognitive radio network.

According to a further aspect of the invention, there is provided a method comprising synchronizing transmissions between a source node, a destination node and at least one relay node into synchronized timeslots; transmitting a first message from the source node to the destination node in a first timeslot, receiving and storing the message at one or more relay nodes that operate in an incremental relaying manner; transmitting from the destination node an indication of whether the first message has been correctly received; at the one or more relay nodes, not transmitting the first message when no indication or a positive indication is received from the destination node at the one or more relay nodes; at the source node, transmitting a second message in a subsequent timeslot when the source node receives a positive indication from the destination node; and wherein when no indication or a negative indication is received at the source node from the destination node and a negative indication is received at the at least one relay node from the destination node, the source node and the at least one relay node participate in a cooperative retransmission process in which: the source node retransmits the first message in the subsequent timeslot, or performs neither retransmission of the first message nor transmission of a second message in the subsequent timeslot; and the at least one relay node transmits the first message in the subsequent timeslot.

The method may further comprise not transmitting from the source node in the subsequent timeslot when a negative indication is received or no indication is received at the source node from the destination node, or alternatively retransmitting the first message from the source node in the subsequent timeslot when a negative indication is received or no indication is received at the source node from the destination node.

The method may further comprise retransmitting at a plurality of relay nodes in the subsequent timeslot in response to receiving the negative indication from the destination node.

Also disclosed is a relay node for use in a communications system, the relay node comprising means for receiving a first message intended for a destination node from a source node, means for receiving an indication from the destination node indicating whether or not the destination node has correctly received the first message, and means for retransmitting the first message in response to receiving a negative indication from the destination node indicating that the destination node has not correctly received the first message, and wherein if the relay node receives no indication of receipt from the destination node, the relay node is configured not to retransmit the first message.

Also disclosed is a source communications node for use in a communications system, the source node comprising means for transmitting a first message to a destination node in a first timeslot, means for receiving an indication from the destination node indicating whether or not the destination node has correctly received the first message, and wherein the source node is configured not to transmit a different message and not to retransmit the first message in a subsequent timeslot if no indication of receipt is received at the source node from the destination node.

According to a further aspect of the invention, there is provided a communication node operable as a relay node and as a source node in a communication network, the node comprising; means for synchronising transmission and reception timeslots with a destination node and at least one other communication node; means for transmitting a message in a timeslot, means for receiving a message in a timeslot, means for receiving an indication from the destination node indicating whether or not the destination node has correctly received a message, and controlling means configured to change mode of the communication node between a first mode and a second mode, wherein the communication node is configured to operate as the relay node in the first mode and to operate as the source node in the second mode; wherein when operating as the relay node the relay node operates in an incremental relaying manner and: the means for receiving a message is configured to receive and store a first message transmitted in a first timeslot by another communication node intended for the destination node; when the relay node receives no indication of receipt or a positive indication of receipt of the first message from the destination node, the relay node is configured not to transmit the first message; and in response to receiving a negative indication from the destination node indicating that the destination node has not correctly received the first message, the relay node is configured to transmit the first message in a subsequent time slot; wherein when operating as the source node: the means for transmitting a message is configured to transmit a first message to the destination node in a first timeslot; the source node is configured to transmit a second message in a subsequent timeslot when a positive indication of receipt for the first message is received at the source node from the destination node; and when no indication or a negative indication is received at the source node from the destination node in respect of the first message, the source node is configured to retransmit the first message in the subsequent timeslot, or to perform neither retransmission of the first message nor transmission of said second message in the subsequent timeslot.

According to a further aspect of the invention, there is provided a computer implementable instructions product comprising computer implementable instructions for causing a programmable computer device to become configured as the communication node described above.

The invention provides, for all methods disclosed, corresponding computer programs or computer program products for execution on corresponding equipment, the equipment itself (user equipment, nodes or components thereof) and methods of updating the equipment.

## Advantageous Effects of Invention

According to the present invention, it is possible to deal with situations in which a feedback signal from a destination node is lost.

**Brief Description of Drawings**

[Fig. 1]

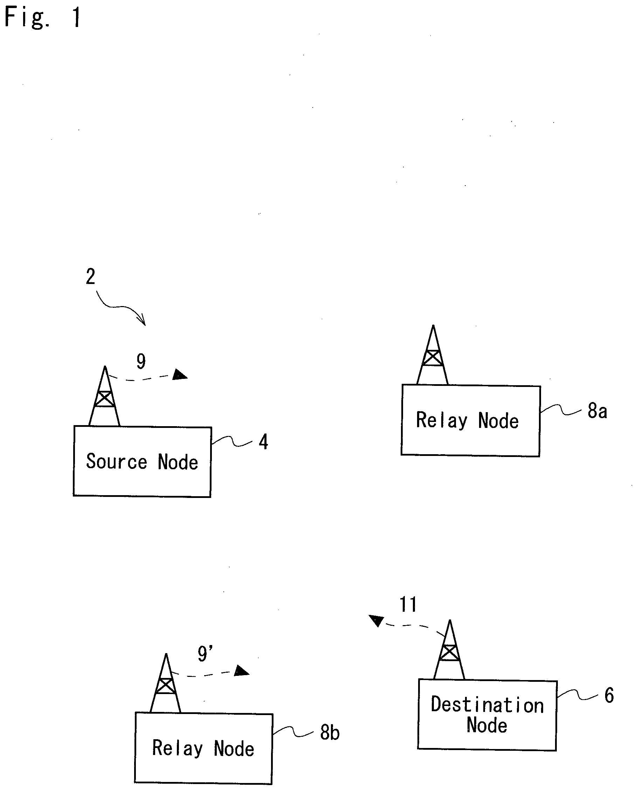

Fig. 1 schematically illustrates a mobile telecommunication system of a type to which the invention is applicable.
[Fig. 2]

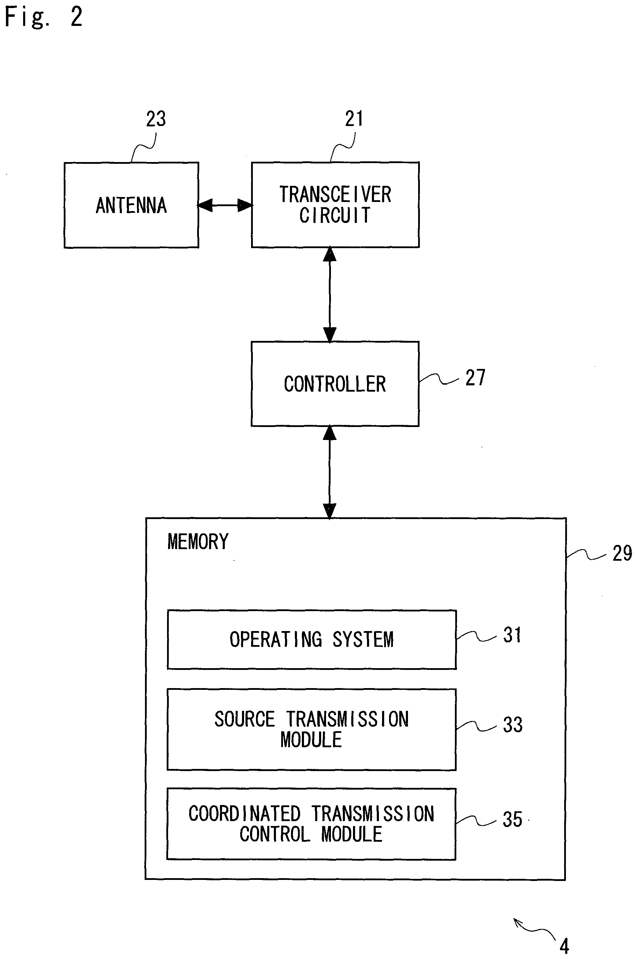

Fig. 2 shows a block diagram of a source node as shown in Fig. 1.
[Fig. 3]

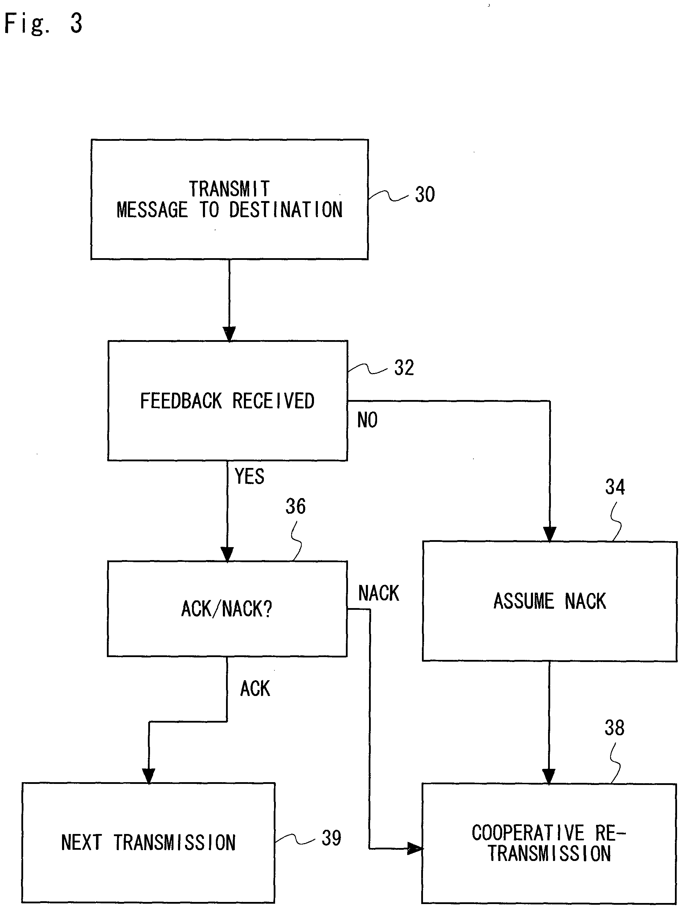

Fig. 3 illustrates a method performed at the source node of Fig. 2 according to the invention.
[Fig. 4]

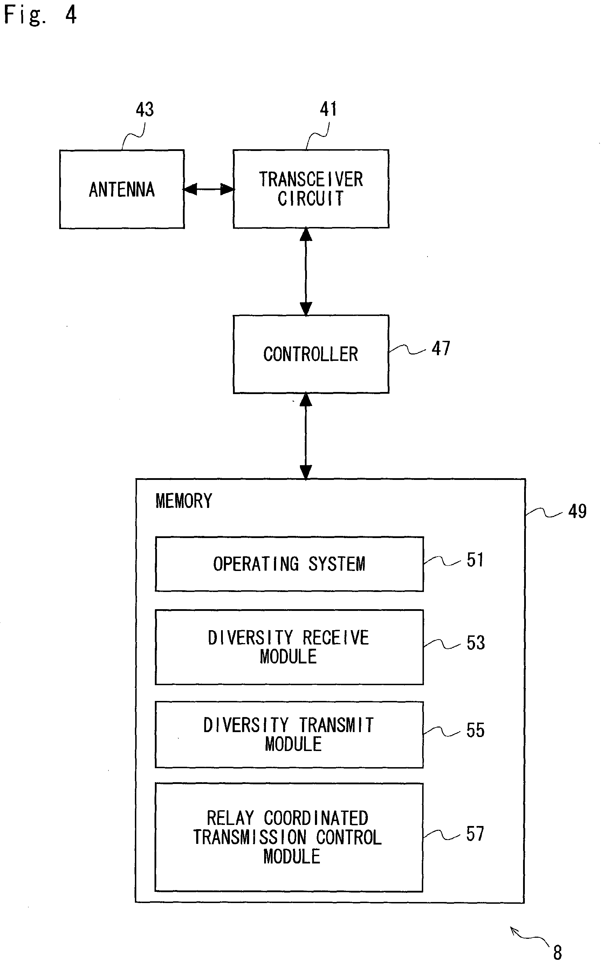

Fig. 4 shows a block diagram of a relay node as shown in Fig. 1.
[Fig. 5]

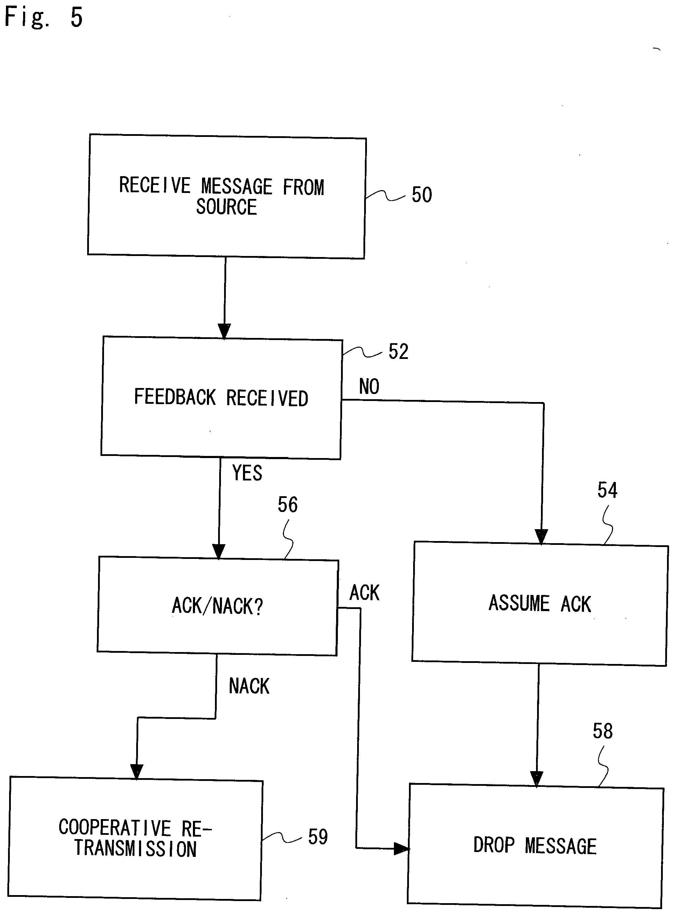

Fig. 5 illustrates a method performed at the relay node of Fig. 4 according to the invention.
[Fig. 6]

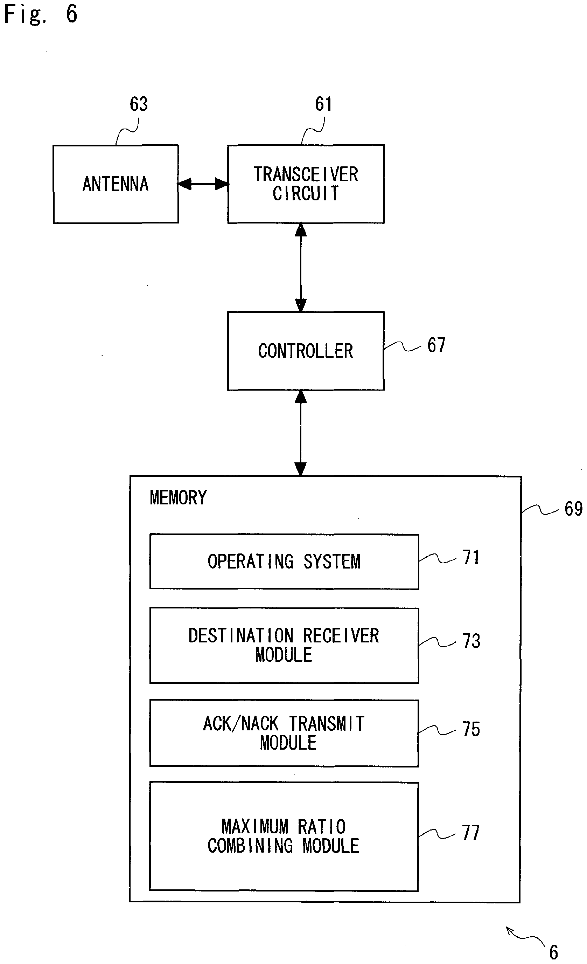

Fig. 6 shows a block diagram of a destination node as shown in Fig. 1.
[Fig. 7A]

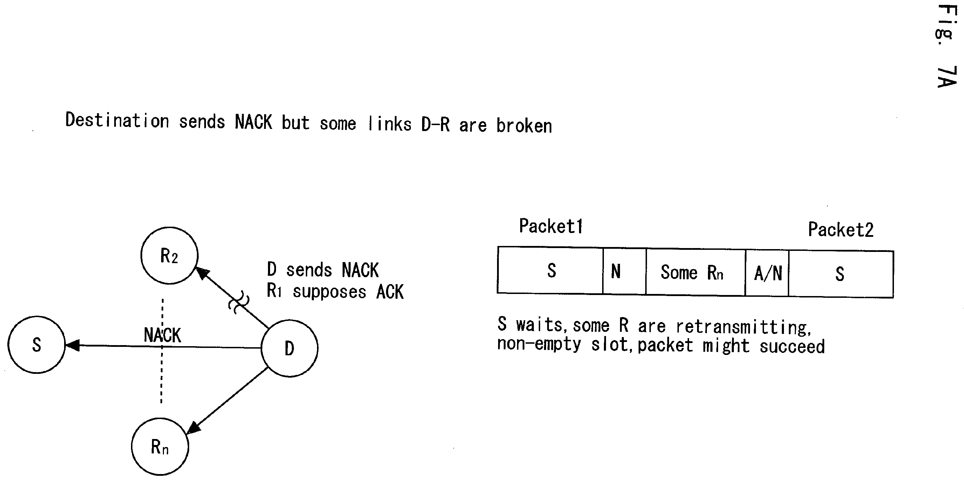

Fig. 7A illustrates a situation in which a destination node transmits a NACK message that is not received by a relay node.
[Fig. 7B]

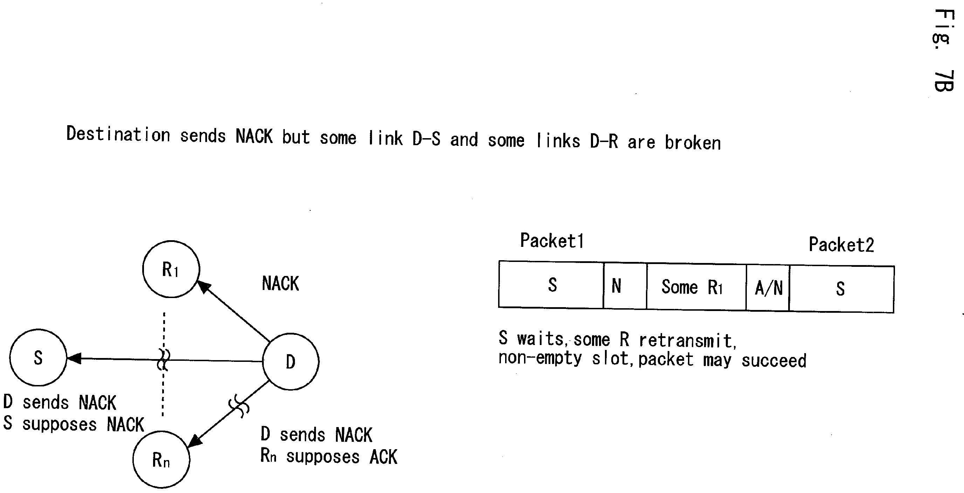

Fig. 7B illustrates a situation in which a destination node transmits a NACK message that is not received by a source node and a relay node.
[Fig. 7C]

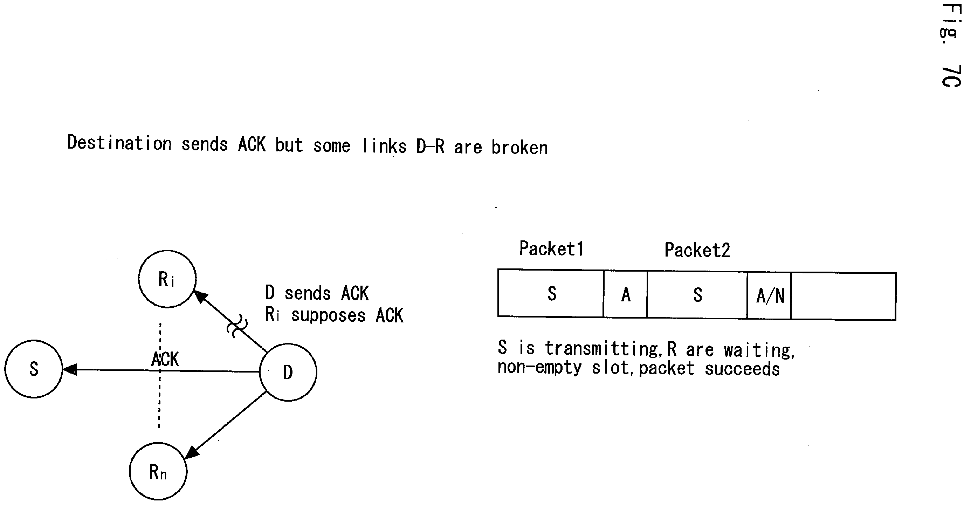

Fig. 7C illustrates a situation in which a destination node transmits an ACK message that is not received by a relay node.
[Fig. 7D]

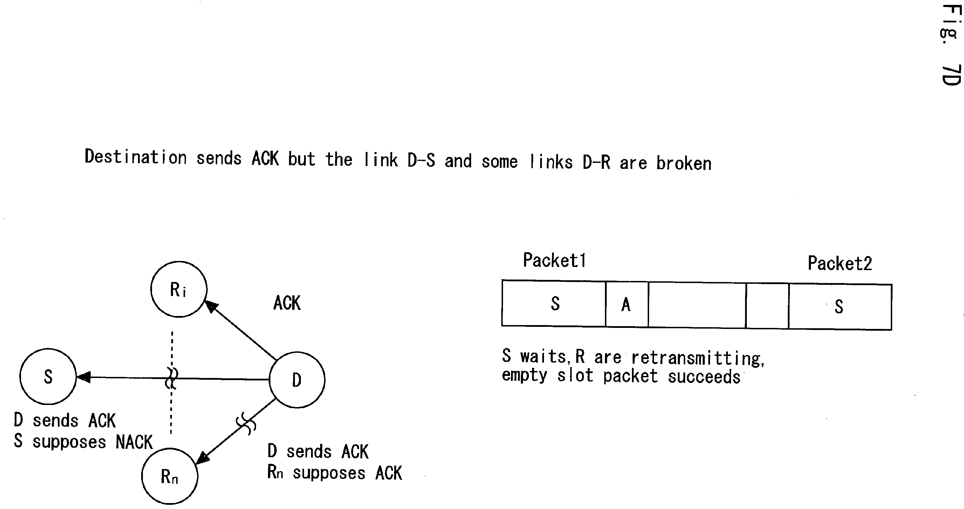

Fig. 7D illustrates a situation in which a destination node transmits an ACK message that is not received by a source node and a relay node.

**Description of Embodiments**

An exemplary embodiment of the invention will now be described, by way of example, with reference to the accompanying drawings.

[Overview]

Fig. 1 schematically illustrates a wireless network 2 including a source transmitter node 4, first and second relay nodes 8a, 8b and a destination receiver node 6. As will be recognized by the skilled person, any of the nodes may comprise fixed transmitters or one or more of the nodes may be mobile nodes within the network 2. The source node 4 transmits a message 9 to be received by the destination node 6. The message 9 is also received by one or more of the relay nodes 8a and 8b, which store the message 9 to allow the message to be retransmitted as part of a cooperative transmission function. The source node 4 and the relay nodes 8 share the same frequencies and must therefore avoid transmitting different messages in the same timeslots as this will lead to collisions in the network.

The destination node 6 provides feedback 11 to the other nodes in the network 2 depending on whether the message 9 has been successfully received. Thus, if the message 9 is successfully received an ACK (positive acknowledgement) will be transmitted to the source node 4 and the first and second relay nodes 8a and 8b. However, in the case when the message 9 is not successfully received the destination node 6 will instead transmit a NACK (negative acknowledgement).

The relay nodes 8 upon receiving a NACK feedback message 11 transmitted from the destination node 6, re-transmit the message 9' received from the source node 4, in a subsequent timeslot, thereby providing a further copy of the message 9' to the destination node 6 to improve the probability of correct reception of the message. If the source node 4 receives the NACK feedback message 11, then, in this embodiment, it does not transmit a subsequent different " message that it would otherwise have transmitted in the subsequent timeslot - to allow the relay node(s) 8 to re-transmit the message 9' without collision. As will be described in more detail later, in an alternative embodiment, the source node 4 may also re-transmit the message 9' in the subsequent timeslot if it receives the NACK feedback message 11.

Sometimes, for example due to noise or changing radio channel conditions, the ACK or NACK message 11 transmitted by the destination node 6 will not be received by one or more of the relay nodes 8 or the source node 4. According to embodiments of the invention, the source node 4 is pessimistic with regard to the receipt of ACK/NACK messages 11 from the destination node 6, such that the source node 4 assumes that the original message 9 was not correctly received by the destination node 6 if no ACK/NACK message 11 is received by the source node 4.

In contrast, the relay nodes 8 are optimistic with regard to ACK/NACK messages 11 from the destination node 6, i.e. the relay nodes 8 assume that the original message 9 was correctly received by the destination node 6 if the relay nodes 8 do not receive the ACK/NACK message 11.

[Source Node]

Fig. 2 is a block diagram illustrating the main components of a source node 4, shown in Fig. 1. As shown, the source node 4 includes transceiver circuitry 21 which is operable to transmit signals to and to receive signals from other nodes via one or more antennas 23. A controller 27 controls the operation of the transceiver circuitry 21 in accordance with software stored in memory 29. The software includes, among other things, an operating system 31, a source transmission module 33, and a coordinated transmission control module 35.

The operating system 31 is operable to control operation of the source node. The source transmission module 33 is operable to cause the source node 4 to transmit a sequence of messages 9 containing information to the destination node 6. The coordinated transmission control module 35 is operable to receive an ACK/NACK message 11 from the destination node 6 to determine whether each message 9 has been successfully received, and to control the operation of the source node 4 in response to the receipt or non-receipt of the ACK/NACK message 11 from the destination node 6. If no ACK/NACK is received or a NACK is received, then the coordinated transmission control module 35 causes the source node to make the next timeslot available for coordinated re-transmission of the message 9' (i.e. by stopping the source node 4 from transmitting the next message in the sequence in the next timeslot). In this embodiment, the source node 4 does not re-transmit the message 9 in this subsequent timeslot (instead leaving this re-transmission to the relay node(s) 8). However, as mentioned above, in an alternative embodiment, the source node 4 may actively re-transmit the original message 9 in the next timeslot along with the re-transmission of the message 9' from the relay nodes 8.

Fig. 3 illustrates the control method performed at the source node 4 according to embodiments of the invention. In block 30, a message 9 is transmitted by the source node 4 to the destination node 6. The source node 4 then waits to determine if a feedback (ACK/NACK) message 11 has been received from the destination node 6 in block 32. If a feedback message 11 is received, the source node 4 determines whether the message is an ACK or a NACK in block 36. If an ACK has been received, the source node 4 transmits the next message in the next timeslot at block 39. However, if a NACK is received, the source node 4 participates in cooperative retransmission by making the next timeslot available for the re-transmission of the message 9' by the relay nodes 8 in block 38. If at block 32 the source node 4 determines that no feedback message has been received, the source node 4 assumes that the feedback is a NACK at block 34, and then participates in the cooperative transmission in block 38 as before.

[Relay Node]

Fig. 4 is a block diagram illustrating the main components of a relay node 8, shown in Fig. 1. As shown, the relay node 8 may be similar in construction to the source node 4, and includes transceiver circuitry 41 which is operable to transmit signals to and to receive signals from other nodes via one or more antennas 43. A controller 47 controls the operation of the transceiver circuitry 41 in accordance with software stored in memory 49. The software includes, among other things, an operating system 51, a diversity receive module 53, a diversity transmit module 55, and a relay coordinated transmission control module 57.

The operating system 51 is operable to control operation of the relay node 8. The diversity receive module 53 is operable to monitor transmission in the network and to receive and temporarily store the above described message 9 transmitted from the source node 4 to the destination node 6. The diversity transmit module 55 is operable to re-transmit the received message 9 in a subsequent timeslot under control of the relay coordinated transmission control module 57. The relay coordinated transmission control module 57 is operable to monitor the network for ACK/NACK messages 11 transmitted by the destination node 6 in response to receiving the message 9 from the source node 4, and if a NACK message 11 is received, to control the diversity transmit module 55 to re-transmit the message 9 received from the source node 4.

If no ACK/NACK message 11 is received at the relay node 8, then the relay coordinated transmission control module 57 assumes that the original message 9 was correctly received by the destination node 6, and therefore there is no need to retransmit the original message 9 in a subsequent timeslot.

Fig. 5 illustrates a method performed at a relay node 8 according to embodiments of the invention. In block 50, a message 9 transmitted by the source node 4 to the destination node 6 is received at the relay node 8. The relay node then waits to determine if a feedback message 11 is received from the destination node 6 in block 52. If a feedback message 11 is received, the relay node 8 determines whether the message is an ACK or a NACK in block 56. If an ACK has been received, the relay node 8 deletes the received message 9 from its memory 49 in block 58 as retransmission is not necessary. However, if a NACK is received, the relay node 8 participates in cooperative retransmission in block 59 by retransmitting the message 9 from the source node 4 to the destination node 6 in a subsequent timeslot. If at block 52 the relay node 8 determines that no feedback message has been received, the relay node 8 assumes that the feedback is an ACK at block 54, and therefore at block 58 does not retransmit the message.

[Destination Node]

Fig. 6 is a block diagram illustrating the main components of the destination node 6, shown in Fig. 1. As shown, the destination node 6 may be similar to the source and relay nodes and includes transceiver circuitry 61 which is operable to transmit signals to and to receive signals from other nodes via one or more antennas 63. A controller 67 controls the operation of the transceiver circuitry 61 in accordance with software stored in memory 69. The software includes, among other things, an operating system 71, a destination receiver module 73, an ACK/NACK transmit module 75 and a maximum ratio combining module 77.

The operating system 71 is operable to control operation of the destination node 6. The destination receiver module 73 is operable to cause the destination node 6 to receive the message 9 transmitted by the destination node 6, or the message 9' retransmitted by one or more of the relay nodes 8. The ACK/NACK transmit module 75 is operable to determine whether the message 9 has been successfully received and to transmit an ACK or NACK message 11 onto the network in dependence on that determination (i.e. to transmit an ACK if the message 9 is successfully received from the source node 4, or to transmit an NACK if the message 9 has not been successfully received). The maximum ratio combining module 77 is operable to receive the retransmitted copies of the message 9' and to combine them with the originally received message 9 to increase the probability of successfully decoding the received message 9.

In the above description, the nodes have been described, for ease of understanding, as having a number of discrete modules (such as the source transmission module 33, and the Amplify-and-Forward control module 35, etc). Whilst these modules may be provided in this way for certain applications, for example where an existing system has been modified to implement the invention, in other applications, for example in systems designed with the inventive features in mind from the outset, these modules may be built into the overall operating system or code and so these modules may not be discernible as discrete entities.

While the source node 4, the destination node 6, and the relay nodes 8 have been described as having separate software modules and functions, it will be recognized by the skilled person that in some embodiments a single node type may provide all of the functionality and may be able to operate as any one of a source node, destination node, or a relay node according to the position of the node in the network and whether it is involved in transmitting or receiving messages.

It is noted that multiple relay nodes 8 (and in some embodiments the source node 4) may retransmit the message 9' at the same time for receipt at the destination node 6. However, as the source node 4, the relay nodes 8 and the destination node 6 are configured to transmit/receive in synchronised timeslots and the message that they are transmitting is the same, no collisions occur and the destination node 6 is be able to combine the re-transmitted messages to improve the probability of the message 9 being successfully decoded.

[Cooperative Transmission Operation]

The above described operation of the source node 4 and relay node 8 in response to failing to receive a feedback message 11 from a destination node 6 leads to advantageous behaviour of the network without requiring any low level communication channels (e.g. control channels) between the nodes. Some of these advantages will now be described.

The behaviour of the network when an ACK or NACK message 11 from the destination node 6 is not received by one or more nodes in the system will now be described with reference to Figs. 7A, 7B, 7C, and 7D.

In the situation shown in Fig. 7A, the destination node D fails to correctly decode the original message 9 sent by the source node S, and therefore generates a NACK message 11 which is transmitted onto the network. However, as shown in Fig. 7A, this NACK message is not received by the first relay node Ri. As the first relay node Ri does not receive the NACK message, it does not participate in the cooperative retransmission of the message 9. However, the second relay node Rn does receive the NACK, and therefore it does retransmit the original message 9.

In this example, the source node S also received the NACK message 11, and therefore the source node S will participate in the cooperative retransmission scheme. In the first embodiment discussed above, the source node 4 will participate in the cooperative retransmission scheme by not transmitting in the subsequent timeslot to allow the retransmissions from the relay nodes 8 to be transmitted in that timeslot. In the alternative embodiment mentioned above, the source node 4 will participate in the cooperative retransmission scheme by actively retransmitting the original message 9 to the destination node D together with the relay nodes 8.

The destination node D may then perform maximum ratio combining (MRC) on the two received versions of the original message 9 increasing the probability of successful decoding of the message 9.

In the situation shown in Fig. 7B, the destination node D transmits a NACK message 11 as in Fig. 7A, however in this case the NACK is not received by the source node S or the second relay node Rn. The source node S will therefore assume that the feedback message 11 is a NACK, and will participate in the cooperative retransmission, along with the first relay node Ri which received the NACK from the destination node D. The source node S will participate in the cooperative retransmission scheme by either not transmitting in the subsequent timeslot (in accordance with the first embodiment) to allow the retransmissions from the relay nodes 8 to be transmitted in that timeslot, or (in accordance with the alternative embodiment) by actively retransmitting the message 9 to the destination node D together with the relay nodes 8.

As the second relay node Rn does not receive any feedback message, the second relay node assumes that the message is an ACK and therefore does not retransmit the original message 9.

The destination node D will therefore receive the retransmitted message 9' from the first relay node Ri (and also from the source node 4 in the alternative embodiment), and will combine the copies of the original message that have been received to improve the probability of decoding the message.

In the situation shown in Fig. 7C, the destination node D successfully decodes the original message 9 at the first attempt and therefore generates an ACK message 11 which is transmitted on the network. The source node S receives this ACK message, and is therefore able to use the subsequent timeslot to transmit a different message. The second relay node Rn also receives the ACK message, and therefore understands that the next timeslot will contain a new transmission from the source node S.

However, the first relay node Ri does not receive the ACK message 11. The first relay node, having not received a feedback message 11 from the destination node D, will assume that the message was an ACK, and will therefore assume that the next transmission will be a new message, and that there is no need to retransmit the original message 9 thereby avoiding causing any interference in the network while allowing the next timeslot to be used to carry new data. Thus, in this case spectral efficiency is improved as compared to the simple retransmission scheme.

In the situation shown in Fig. 7D, the original message 9 is correctly decoded and an ACK message 11 is transmitted by the destination node D. However, the ACK message 11 is not received by the source node S or the second relay node Rn. As the source node has not received the ACK message 11, the source node S will assume that this message 11 is a NACK and will allocate the subsequent timeslot for use in the cooperative retransmission scheme. However, neither relay node will participate in the cooperative retransmission as the first relay node Ri correctly receives the ACK message 11, and the second relay node Rn, having failed to receive any feedback message 11 assumes an ACK.

This situation leads to an unused timeslot, which reduces the efficiency of the network, however overall the cooperative transmission scheme of the invention may lead to more efficient use of resources than classical fixed Amplify-and-Forward schemes, while avoiding the implementation issues that render the Full-Incremental Amplify-and-Forward Relaying scheme proposed by Panaitopol impractical.

The described invention may have one or more of the following advantages over the prior art Amplify-and-Forward schemes described above:

-    This scheme provides a solution to deal with imperfect feedback from the destination and makes incremental relaying practical.
-    Compared to a classical Amplify-and-Forward scheme, or the classical non-cooperative schemes, the performance of the proposed scheme improves in terms of message correct reception probability.
-    Incremental relaying will help to increase the average transmission rate, and the scheme proposed to deal with imperfect feedback from the destination makes the incremental relaying method practical.
-    The proposed method does not explicitly need any exchanged information (control data) between the relays and the source or between the relays themselves in order to coordinate their transmissions or for any other purposes, and therefore any other control or scheduling protocol (that might have decreased the total useful throughput) is no longer needed.
-    The proposed method provides a useful compromise between full Incremental Amplify-and-Forward relaying (not practical) and classical fixed Amplify-and-Forward schemes (under-optimized).

[Modifications and Alternatives]

A number of detailed embodiments have been described above. As those skilled in the art will appreciate, a number of modifications and alternatives can be made to the above embodiments whilst still benefiting from the inventions embodied therein. By way of illustration only a number of these alternatives and modifications will now be described.

While the cooperative retransmission scheme has been described generally above, the skilled person will recognize that the described techniques will be applicable to a number of different wireless communication standards. For example:

- With regards the LTE standards, in the uplink the source node 4 can be seen as an (LTE) User Equipment (UE) device and the destination node 6 as an evolved Node B (eNB). Similarly, in LTE downlink mode, the source node 4 may be an eNB and the destination node 6 a UE. Currently, 3GPP is considering the use of Relays (i.e. Relaying Nodes RN) in order to help the UE or the eNB to transmit the information which may advantageously use the techniques described herein.

- With regards the recent Cognitive Radio standards, the destination node 6 may be seen as a Primary Receiver and the relay nodes 8 may be seen as Secondary Transmitters willing to share the same resources (such the same frequency band) with the Primary System. This frequency and time sharing method is known in Cognitive Radio under the names of overlaying (when the Secondary Transmitters (i.e. relay nodes) are transmitting their own information but they are also helping the Primary Receiver) and as underlaying cognitive radio strategy (when the Secondary transmitters are transmitting below a certain transmission threshold, so they are not affecting the Primary Receiver). For the overlaying strategy, the Secondary Transmitter(s) (i.e., relay nodes) may decide to help the Primary Receiver, in order to reduce the interference at the level of the Primary Receiver, interference that may have been created by them or by other Secondary Systems. Therefore, together with the Primary Transmitter (which is the source node 4), the Secondary Transmitters (i.e. Relay Nodes) may help relaying the information towards the Primary Receiver.

The described cooperative transmission scheme can be used to improve transmission for multiple technologies, such as Time Reversal (TR) Schemes, Time Reversal Impulse Radio Ultra Wide Band (TR-IR-UWB), or even Orthogonal Frequency Division Multiplexing (OFDM).

It will be recognized that the proposed scheme can improve any other incremental scheme by definition, and therefore is not restricted only to Amplify-and-Forward schemes, but is also applicable to other schemes such as Decode-and-Forward or any other cooperative scheme that could be adjusted for the incremental case.

As noted above, in some embodiments the Relays Rn can collaborate together (simultaneously, in the time domain) and are not required to use different channels (in code domain or frequency domain). However, for the case in which the relay nodes transmit on different channels (code domain or frequency domain multiplexing), the receiver of the destination will be able not only to perform MRC between the message 9' received from the relays 8 and the message 9 received from the source node, but also among the retransmitted messages 9' from the relay nodes (since the destination node is able to capture the signal on different channels affected by different noise, and distinguish between them).

Performance of the described scheme may be increased further in a system where the relay nodes and/or the source node use multiple antennas providing spatial diversity to the transmitted signal.

According to some embodiments, in systems comprising a large number of relay nodes, the relay nodes used to retransmit the message may be chosen specifically from the relay nodes in the system to maximize the success probability, using different channel state information (CSI) measurements or different geographical positioning information.

As noted above, the described coordinated transmission scheme could be further improved if the source node helps the relay nodes in retransmitting the message in the next timeslot. For example, when the source node receives a NACK message or does not receive any feedback message from the destination node, the source node, being pessimistic, could retransmit the message. Such a source node may be considered proactive and pessimistic in the same time.

In some embodiments, the source node may choose whether or not to re-transmit the message along with the one or more relay nodes in the subsequent timeslot. The selection at the source node as to whether to re-transmit the message or not may be based on channel conditions for the communications channel between the source node and the destination node. For example, if the source node determines that the (instantaneous) channel conditions are such that re-transmitting the message at the source node S will not significantly improve the probability of reception at the destination node D, the source node will choose not to retransmit, i.e. when:

$$\frac{\sum_{n=1}^{N}\left(\left|h_{S,Rn}\beta_{Rn}h_{Rn,D}\right|^{2}\right)+\left|h_{S,D}\right|^{2}}{\sum_{n=1}^{N}\left(\beta_{Rn}^{2}\left|h_{Rn,D}\right|^{2}\right)+1} \cong \frac{\sum_{n=1}^{N}\left(\left|h_{S,Rn}\beta_{Rn}h_{Rn,D}\right|^{2}\right)}{\sum_{n=1}^{N}\left(\beta_{Rn}^{2}\left|h_{Rn,D}\right|^{2}\right)+1}$$

and therefore when:

$$\sum_{n=1}^{N}\left(\beta_{Rn}^2\left|h_{Rn,D}\right|^2\right)+1 >> \left|h_{S,D}\right|^2$$

where $\beta_{Rn}$ is the amplification factor of each relay Rn, $N$ is the number of the relays used for retransmission, and $h_{X,Y}$ is the channel condition between X and Y (where X, Y $\in$ {S,D,Rn} with S the source node, D the destination node, and Rn a relay node).

The amplification factor may take the form of:

$$\beta_{Rn} = \sqrt{\frac{P_{Rn}}{P_S\left|h_{S,Rn}\right|^2 + N_0}}$$

where $P_S$ and $P_{Rn}$ are the transmission powers of the source node S and of the relay node Rn respectively, and where $N_0$ is the noise power.

Alternatively, the source node may choose not to retransmit the message if it is determined that the combined channel of the relay nodes provides a better probability of reception than the single channel between the source node and the destination node, i.e. when:

$$\frac{\sum_{n=1}^{N}\left(\left|h_{S,Rn}\beta_{Rn}h_{Rn,D}\right|^2\right)}{\sum_{n=1}^{N}\left(\beta_{Rn}^2\left|h_{Rn,D}\right|^2\right)+1} >> \left|h_{S,D}\right|^2$$

Alternatively, the source node may choose to retransmit the message if it is determined that the combined channel when the source node retransmits with the relay nodes provides a better probability of reception than the single channel between the source node and the destination node, i.e. when:

$$\frac{\sum_{n=1}^{N}\left(\left|h_{S,Rn}\beta_{Rn}h_{Rn,D}\right|^2\right)+\left|h_{S,D}\right|^2}{\sum_{n=1}^{N}\left(\beta_{Rn}^2\left|h_{Rn,D}\right|^2\right)+1} >> \left|h_{S,D}\right|^2$$

and therefore when:

$$\frac{\sum_{n=1}^{N}\left(\left|h_{S,Rn}\beta_{Rn}h_{Rn,D}\right|^2\right)}{\sum_{n=1}^{N}\left(\beta_{Rn}^2\left|h_{Rn,D}\right|^2\right)} >> \left|h_{S,D}\right|^2$$

The source node may estimate the channel quality for the communication channel between the source node and the destination node based on the number of ACK/NACK messages received by the source node from the destination node after the first transmission of a message (assuming the communication channel to be symmetrical). Similarly, the source node may determine whether the presence of a re-transmitted message from the source has improved the probability of reception of the message based on the number of ACK/NACK messages received after each second (re-)transmission.

Alternatively, the source node may be informed about the channel quality estimated by the destination or/and by the relays.

In an alternative embodiment, the source may choose whether to re-transmit the message in response to a NACK, or when no feedback message is received based on a status of the source node, for example if the source node determines that it should save power for future transmissions (i.e. is in a power saving mode) then the source node will not re-transmit the message.

The described coordinated retransmission scheme could be combined with a Hybrid Automatic Repeat Request (HARQ) process implemented in upper layers of the network. Thus, if the retransmitted message 9' from the relay nodes does not reach the destination node D (e.g. packet 1 does not succeed) the HARQ process will inform the source node of the failure to deliver the packet after the retransmission. This solution may increase the performance of the scheme only in the case of Fig. 7A (destination sends NACK) and only if all the relay nodes fail to receive the feedback message 11. In this case, the source node, instead of sending another packet, recodes the bits from packet 1 (the original message 9) and sends the same information (but using different coding) in a subsequent packet. After that, the destination node could perform Incremental Redundancy or other Hybrid ARQ techniques, by using information from multiple received packets to recover the message.

The above discussion describes the transmission of a packet in one timeslot. As will be recognized, such timeslots can be of fixed or variable size. Similarly data packets transmitted in the network may be of fixed or variable size. According to some embodiments a single data packet may be transmitted in each timeslot. Alternatively, some other ratio may be used for data packets per timeslot. Nodes within the network may be informed of the configuration of timeslots in use in the network via signalling from the source node.

The messages transmitted to the destination node are described as being transmitted in a single timeslot, and then retransmitted in a subsequent timeslot. In an alternative embodiment a single message may fill multiple timeslots, or may comprise more than one data packet. The feedback message provided by the destination node may then correspond to correct reception of the plurality of data packets, and the whole message, or plurality of data packets, may be retransmitted. Signalling may be used to indicate to the nodes in the network a number of consecutive timeslots to be used to transmit each message.

Further, it will be recognized that retransmission of the message by the one or more relay nodes (and the source node as appropriate) is not limited to the next timeslot after the original transmission, but may use a later timeslot, for example offset by a fixed number of timeslots from the original transmission. In this way, the source node having transmitted a first packet may transmit one or more further data packets before re-transmitting the first data packet in response to a NACK message received from the destination node. Such an arrangement may advantageously avoid the source node waiting to receive an ACK/NACK message from the destination node before transmitting a subsequent message.

While the described embodiments relate to a network having two relay nodes, it will be recognized that any number (one or more) of relay nodes may be provided to cooperatively send the information from a source towards the destination node 6 using multiple relays (all transmitting together). Incremental relaying may help to increase the average transmission rate, and the proposed scheme to deal with imperfect feedback from the destination makes the incremental relaying method practical.

Furthermore, the skilled person will recognize that in some network topologies (such as a homogeneous network) a node may act as a source node, as a relay node, or as a destination node depending upon whether that node is currently transmitting a message, receiving a message or in a position to act to relay a message. Thus, in some embodiments network nodes may be provided that are able to act as a source node during a first period of time in which the node transmits one or more packets of data, and then as a relay node when that node is not itself transmitting onto the network.

The skilled person will recognize that the described method could be used to benefit several modulation schemes, for example Time Reversal (TR) Schemes, Time Reversal Impulse Radio Ultra Wide Band (TR-IR-UWB), Orthogonal Frequency Division Multiplexing (OFDM), Code Division Multiple Access (CDMA) or others. While in Time Reversal the transmitter uses a prefiltering block in order to cancel the multipath channel effect, in OFDM the multipath channel effect is reduced by using the Inverse Fourier Transform (IFT) combined with the cyclic prefix which cancels the Inter Symbol Interference (ISI). OFDM provides robustness to fading by dividing the wideband signal into many slowly modulated narrowband subcarriers, each exposed to flat fading rather than frequency selective fading. For this reason, adding multiple versions of the same information coming from different relays (transmitting at the same time) may increase the reception performance at the destination (with or without special precoding schemes).

As described above, there are two possible implementation solutions in which the behaviour of the source node 4, when participating in the cooperative retransmission scheme, differs:

The source may not participate in the subsequent timeslot by repeating the first transmission simply leaving the subsequent timeslot for retransmission by one or more relay nodes. This concept is illustrated in Table 1.

EP 2 692 071 B1

[Table 1]

|  | Source | Relay(s) |
|---|---|---|
| **ACK** | Send next packet (Pkt2) | Not sending |
| **NACK** | Not sending | Send same packet (Pkt1) |
| **Lost** | Not sending | Not sending (optimistic) |

Alternatively, the source may also participate in the second timeslot by repeating the first transmission along with the relay nodes, the concept is illustrated in Table 2.

[Table 2]

|  | Source | Relay |
|---|---|---|
| **ACK** | Send next packet (Pkt2) | Not sending |
| **NACK** | Send same packet (Pkt1) | Send same packet (Pkt1) |
| **Lost** | Send same packet (Pkt1) | Not sending (optimistic) |

In the above embodiment, a number of network nodes have been described. As those skilled in the art will appreciate, such nodes may comprise any kind of communications node or device, including access points and user devices such as, for example, mobile telephones, personal digital assistants, laptop computers, web browsers, etc.

In the above embodiments, a number of software modules were described. As those skilled in the art will appreciate, the software modules may be provided in compiled or un-compiled form and may be supplied to the cognitive node as a signal over a computer network, or on a recording medium. Further, the functionality performed by part or all of this software may be performed using one or more dedicated hardware circuits. However, the use of software modules is preferred as it facilitates the updating of the node in order to update its functionality. Similarly, although the above embodiments employed transceiver circuitry, at least some of the functionality of the transceiver circuitry can be performed by software.

Various other modifications will be apparent to those skilled in the art and will not be described in further detail here.

This application is based upon and claims the benefit of priority from United Kingdom patent application No. GB1105487.1, filed on March 31, 2011.

**Reference Signs List**

| 2 | WIRELESS NETWORK |
|---|---|
| 4 | SOURCE NODE |
| 6 | DESTINATION NODE |
| 8a, 8b | RELAY NODE |
| 9 | MESSAGE |
| 11 | FEEDBACK MESSAGE |
| 21, 41, 61 | TRANSCEIVER CIRCUIT |
| 23, 43, 63 | ANTENNA |
| 27, 47, 67 | CONTROLLER |
| 29, 49, 69 | MEMORY |
| 31, 51, 71 | OPERATING SYSTEM |
| 33 | SOURCE TRANSMISSION MODULE |
| 35 | COORDINATED TRANSMISSION CONTROL MODULE |
| 53 | DIVERSITY RECEIVE MODULE |
| 55 | DIVERSITY TRANSMIT MODULE |
| 57 | RELAY COORDINATED TRANSMISSION CONTROL MODULE |
| 73 | DESTINATION RECEIVER MODULE |
| 75 | ACK/NACK TRANSMIT MODULE |

77          MAXIMUM RATION COMBINING MODULE

**Claims**

1. A wireless communication system (2) comprising:

   a source node (4), a destination node (6), and at least one relay node (8a) configured to transmit and receive in synchronized timeslots;
   wherein the source node (4) is configured to transmit a first message to the destination node (6) in a first timeslot;
   wherein the destination node (6) is configured to receive the first message and to transmit an indication of whether the first message has been correctly received;
   wherein the at least one relay node (8a) is configured to operate in an incremental relaying manner by receiving and storing the first message transmitted by the source node (4),
   wherein, when the at least one relay node (8a) does not receive the indication from the destination node (6) or receives a positive indication from the destination node (6), the at least one relay node (8a) is configured not to transmit the first message;
   wherein when the source node receives a positive indication from the destination node, the source node is configured to transmit a second message in a subsequent timeslot; and
   wherein when no indication or a negative indication is received at the source node (4) from the destination node (6) and a negative indication is received at the at least one relay node (8a) from the destination node (6), the source node (4) and the at least one relay node (8a) are configured to participate in a cooperative retransmission process in which: the source node (4) is configured to retransmit the first message in the subsequent timeslot, or to perform neither retransmission of the first message nor transmission of said second message in the subsequent timeslot; and the at least one relay node (8a) is configured to transmit the first message in the subsequent timeslot.

2. The system (2) of claim 1, wherein the indication comprises an ACK/NACK response.

3. The system (2) of claim 1 or claim 2, wherein the source node (4) is configured not to transmit in the subsequent timeslot when a negative indication or no indication is received at the source node (4) from the destination node (6).

4. The system (2) of claim 1 or claim 2, wherein the source node (4) is configured to retransmit the first message in the subsequent timeslot when a negative indication or no indication is received at the source node (4) from the destination node (6).

5. The system (2) of claim 3 or claim 4, comprising a plurality of relay nodes (8a) that are configured to re-transmit the first message in the subsequent timeslot in response to the received negative indication from the destination node (6).

6. The system (2) of any of claims 1 to 5, wherein the destination node (6) is configured to perform maximum ratio combining on the first message and the re-transmitted first message received at the destination node (6).

7. The system (2) of any of claims 1 to 6, wherein the communication system (2) comprises a wireless communication system according to the LTE standard, and wherein the source node (4) comprises an eNB, the at least one relay node comprises a LTE relay node, and the destination node (6) comprises a user equipment.

8. The system (2) of any of claims 1 to 6, wherein the communication system (2) comprises a wireless communication system according to the LTE standard, and wherein the source node (4) comprises a user equipment, the at least one relay node comprises a LTE relay node, and the destination node (6) comprises an eNB.

9. The system (2) of any of claims 1 to 6, wherein the communication system (2) comprises a cognitive radio network.

10. A method comprising:

    synchronizing transmissions between a source node (4), a destination node (6) and at least one relay node (8a) into synchronized timeslots;
    transmitting (30) a first message from the source node (4) to the destination node (6) in a first timeslot;
    receiving (50) and storing the message at one or more relay nodes (8a) that operate in an incremental relaying manner;

transmitting, from the destination node (6), an indication of whether the first message has been correctly received;

at the one or more relay nodes (8a), not transmitting the first message when no indication or a positive indication is received from the destination node (6) at the one or more relay nodes (8a);

at the source node (4), transmitting a second message in a subsequent timeslot when the source node (4) receives a positive indication from the destination node (6); and

wherein when no indication or a negative indication is received at the source node (4) from the destination node (6) and a negative indication is received at the at least one relay node (8a) from the destination node (6), the source node (4) and the at least one relay node (8a) participate in a cooperative retransmission process in which: the source node (4) retransmits the first message in the subsequent timeslot, or performs neither retransmission of the first message nor transmission of a second message in the subsequent timeslot; and the at least one relay node (8a) transmits the first message in the subsequent timeslot.

11. The method of claim 10, wherein the indication comprises an ACK/NACK response.

12. The method of claim 10 or 11, wherein the source node (4) transmits the first message in a first timeslot and does not transmit the second message in the subsequent timeslot when a negative indication or no indication is received at the source node (4) from the destination node (6).

13. The method of claim 10, 11 or 12, further comprising not transmitting from the source node (4) in the subsequent timeslot when a negative indication is received or no indication is received at the source node (4) from the destination node (6).

14. The method of any of claims 10 to 12, further comprising retransmitting (38) the first message from the source node (4) in the subsequent timeslot when a negative indication is received or no indication is received at the source node (4) from the destination node (6).

15. The method of claim 13 or 14, further comprising retransmitting at a plurality of relay nodes (8a) in the subsequent timeslot in response to receiving the negative indication from the destination node (6).

16. A communication node operable as a relay node (8) and as a source node (4) in a communication network (2), the node comprising:

means for synchronising transmission and reception timeslots with a destination node (6) and at least one other communication node (4, 8);

means for transmitting a message in a timeslot;

means for receiving a message in a timeslot;

means for receiving an indication from the destination node indicating whether or not the destination node (6) has correctly received a message; and

controlling means configured to change mode of the communication node between a first mode and a second mode, wherein the communication node is configured to operate as the relay node (8) in the first mode and to operate as the source node (4) in the second mode,

wherein when operating as the relay node (8) the relay node operates in an incremental relaying manner and:

the means for receiving a message is configured to receive and store a first message transmitted in a first timeslot by another communication node intended for the destination node (6);

when the relay node (8) receives no indication of receipt or a positive indication of receipt of the first message from the destination node (6), the relay node (8) is configured not to transmit the first message; and

in response to receiving a negative indication from the destination node (6) indicating that the destination node has not correctly received the first message, the relay node (8) is configured to transmit the first message in a subsequent time slot;

wherein when operating as the source node (4):

the means for transmitting a message is configured to transmit a first message to the destination node (6) in a first timeslot;

the source node (4) is configured to transmit a second message in a subsequent timeslot when a positive indication of receipt for the first message is received at the source node (4) from the destination node (6); and

when no indication or a negative indication is received at the source node (4) from the destination node (6) in respect of the first message, the source node (4) is configured to retransmit the first message in the subsequent timeslot, or to perform neither retransmission of the first message nor transmission of said second message in the subsequent timeslot.

**17.** A computer implementable instructions product comprising computer implementable instructions for causing a programmable computer device to become configured as the communication node of claim 16.

**Patentansprüche**

1. Drahtloskommunikationssystem (2) mit:

   einem Quellknoten (4), einem Zielknoten (6) und mindestens einem Relaisknoten (8a), der dafür konfiguriert ist, in synchronisierten Zeitschlitzen zu senden und zu empfangen;
   wobei der Quellknoten (4) dafür konfiguriert ist, eine erste Nachricht in einem ersten Zeitschlitz an den Zielknoten (6) zu übertragen;
   wobei der Zielknoten (6) dafür konfiguriert ist, die erste Nachricht zu empfangen und eine Meldung zu übertragen, die anzeigt, ob die erste Nachricht korrekt empfangen worden ist;
   wobei der mindestens eine Relaisknoten (8a) dafür konfiguriert ist, durch Empfangen und Speichern der durch den Quellknoten (4) übertragenen ersten Nachricht in einem inkrementellen Weitergabemodus zu arbeiten,
   wobei, wenn der mindestens eine Relaisknoten (8a) die Meldung vom Zielknoten (6) nicht empfängt oder eine positive Meldung vom Zielknoten (6) empfängt, der mindestens eine Relaisknoten (8a) dafür konfiguriert ist, die erste Nachricht nicht zu übertragen;
   wobei, wenn der Quellknoten eine positive Meldung vom Zielknoten empfängt, der Quellknoten dafür konfiguriert ist, eine zweite Nachricht in einem nachfolgenden Zeitschlitz zu übertragen; und
   wobei, wenn am Quellknoten (4) keine Meldung oder eine negative Meldung vom Zielknoten (6) empfangen wird und an dem mindestens einen Relaisknoten (8a) eine negative Meldung vom Zielknoten (6) empfangen wird, der Quellknoten (4) und der mindestens eine Relaisknoten (8a) dafür konfiguriert sind, an einem kooperativen Neuübertragungsprozess teilnehmen, in dem: der Quellknoten (4) dafür konfiguriert ist, die erste Nachricht im nachfolgenden Zeitschlitz erneut zu übertragen oder weder eine Neuübertragung der ersten Nachricht noch eine Übertragung der zweiten Nachricht im nachfolgenden Zeitschlitz auszuführen, und der mindestens eine Relaisknoten (8a) dafür konfiguriert ist, die erste Nachricht im nachfolgenden Zeitschlitz zu übertragen.

2. System (2) nach Anspruch 1, wobei die Meldung eine ACK-/NACK-Antwort aufweist.

3. System (2) nach Anspruch 1 oder 2, wobei der Quellknoten (4) dafür konfiguriert ist, im nachfolgenden Zeitschlitz nicht zu senden, wenn am Quellknoten (4) eine negative oder keine Meldung vom Zielknoten (6) empfangen wird.

4. System (2) nach Anspruch 1 oder 2, wobei der Quellknoten (4) dafür konfiguriert ist, die erste Nachricht im nachfolgenden Zeitschlitz erneut zu übertragen, wenn am Quellknoten (4) eine negative oder keine Meldung vom Zielknoten (6) empfangen wird.

5. System (2) nach Anspruch 3 oder 4, mit mehreren Relaisknoten (8a), die dafür konfiguriert sind, die erste Meldung im nachfolgenden Zeitschlitz in Antwort auf die vom Zielknoten (6) empfangene negative Meldung erneut zu übertragen.

6. System (2) nach einem der Ansprüche 1 bis 5, wobei der Zielknoten (6) dafür konfiguriert ist, eine Maximum-Ratio-Kombination bezüglich der ersten Nachricht und der erneut übertragenen ersten Nachricht auszuführen, die am Zielknoten (6) empfangen wird.

7. System (2) nach einem der Ansprüche 1 bis 6, wobei das Kommunikationssystem (2) ein Drahtloskommunikationssystem gemäß dem LTE-Standard aufweist, und wobei der Quellknoten (4) einen eNB aufweist, der mindestens eine Relaisknoten einen LTE-Relaisknoten aufweist, und der Zielknoten (6) ein Benutzergerät aufweist.

8. System (2) nach einem der Ansprüche 1 bis 6, wobei das Kommunikationssystem (2) ein Drahtloskommunikationssystem gemäß dem LTE-Standard aufweist, und wobei der Quellknoten (4) ein Benutzergerät aufweist, der mindestens eine Relaisknoten einen LTE-Relaisknoten aufweist, und der Zielknoten (6) einen eNB aufweist.

9. System (2) nach einem der Ansprüche 1 bis 6, wobei das Kommunikationssystem (2) ein kognitives Funknetzwerk aufweist.

10. Verfahren mit:

Synchronisieren von Übertragungen zwischen einem Quellknoten (4), einem Zielknoten (6) und mindestens einem Relaisknoten (8a) in synchronisierte Zeitschlitze;
Übertragen (30) einer ersten Nachricht vom Quellknoten (4) an den Zielknoten (6) in einem ersten Zeitschlitz;
Empfangen (50) und Speichern der Nachricht an einem oder mehreren Relaisknoten (8a), die in einem inkrementellen Weitergabemodus arbeiten;
Übertragen einer Meldung vom Zielknoten (6), die anzeigt, ob die erste Nachricht korrekt empfangen worden ist;
Nichtübertragen der ersten Nachricht an dem einen oder den mehreren Relaisknoten (8a), wenn vom Zielknoten (6) keine Meldung oder eine positive Meldung an dem einen oder den mehreren Relaisknoten (8a) empfangen wird;
Übertragen einer zweiten Nachricht in einem nachfolgenden Zeitschlitz am Quellknoten (4), wenn der Quellknoten (4) eine positive Meldung vom Zielknoten (6) empfängt; und
wobei, wenn am Quellknoten (4) keine Meldung oder eine negative Meldung vom Zielknoten (6) empfangen wird und an dem mindestens einen Relaisknoten (8a) eine negative Meldung vom Zielknoten (6) empfangen wird, der Quellknoten (4) und der mindestens eine Relaisknoten (8a) an einem kooperativen Neuübertragungsprozess teilnehmen, in dem: der Quellknoten (4) die erste Nachricht im nachfolgenden Zeitschlitz erneut überträgt oder weder eine erneute Übertragung der ersten Nachricht noch eine Übertragung einer zweiten Nachricht im nachfolgenden Zeitschlitz ausführt, und der mindestens eine Relaisknoten (8a) die erste Nachricht im nachfolgenden Zeitschlitz überträgt.

11. Verfahren nach Anspruch 10, wobei die Meldung eine ACK-/NACK-Antwort aufweist.

12. Verfahren nach Anspruch 10 oder 11, wobei der Quellknoten (4) die erste Nachricht in einem ersten Zeitschlitz überträgt und die zweite Nachricht im nachfolgenden Zeitschlitz nicht überträgt, wenn am Quellknoten (4) eine negative oder keine Meldung vom Zielknoten (6) empfangen wird.

13. Verfahren nach Anspruch 10, 11 oder 12, ferner mit dem Nichtübertragen vom Quellknoten (4) im nachfolgenden Zeitschlitz, wenn am Quellknoten (4) eine negative Meldung oder keine Meldung vom Zielknoten (6) empfangen wird.

14. Verfahren nach einem der Ansprüche 10 bis 12, ferner mit dem erneuten Übertragen (38) der ersten Nachricht vom Quellknoten (4) im nachfolgenden Zeitschlitz, wenn am Quellknoten (4) eine negative Meldung oder keine Meldung vom Zielknoten (6) empfangen wird.

15. Verfahren nach Anspruch 13 oder 14, ferner mit dem erneuten Übertragen an mehreren Relaisknoten (8a) im nachfolgenden Zeitschlitz in Antwort auf den Empfang der negativen Meldung vom Zielknoten (6).

16. Kommunikationsknoten, der als ein Relaisknoten (8) und als ein Quellknoten (4) in einem Kommunikationsnetz (2) betreibbar ist, wobei der Knoten aufweist:

eine Einrichtung zum Synchronisieren von Sende- und Empfangszeitschlitzen mit einem Zielknoten (6) und mindestens einem weiteren Kommunikationsknoten (4, 8);
eine Einrichtung zum Übertragen einer Nachricht in einem Zeitschlitz;
eine Einrichtung zum Empfangen einer Nachricht in einem Zeitschlitz;
eine Einrichtung zum Empfangen einer Meldung vom Zielknoten, die anzeigt, ob der Zielknoten (6) eine Nachricht korrekt empfangen hat oder nicht; und
eine Steuereinrichtung, die dafür konfiguriert ist, einen Modus des Kommunikationsknotens zwischen einem ersten Modus und einem zweiten Modus zu ändern, wobei der Kommunikationsknoten dafür konfiguriert ist, im ersten Modus als der Relaisknoten (8) zu arbeiten und im zweiten Modus als der Quellknoten (4) zu arbeiten, wobei, wenn der Kommunikationsknoten als Relaisknoten (8) arbeitet, der Relaisknoten in einem inkrementellen Weitergabemodus arbeitet und:

die Einrichtung zum Empfangen einer Nachricht dafür konfiguriert ist, eine für den Zielknoten (6) bestimmte erste Nachricht zu empfangen und zu speichern, die in einem ersten Zeitschlitz durch einen anderen Kommunikationsknoten übertragen wird;

wenn der Relaisknoten (8) keine Meldung oder eine positive Meldung bezüglich des Empfangs der ersten Nachricht vom Zielknoten (6) empfängt, der Relaisknoten (8) dafür konfiguriert ist, die erste Nachricht nicht zu übertragen; und

in Antwort auf den Empfang einer negativen Meldung vom Zielknoten (6), die anzeigt, dass der Zielknoten die erste Nachricht nicht korrekt empfangen hat, der Relaisknoten (8) dafür konfiguriert ist, die erste Nachricht in einem nachfolgenden Zeitschlitz zu übertragen;

wobei beim Betrieb als Quellknoten (4):

die Einrichtung zum Übertragen einer Nachricht dafür konfiguriert ist, eine erste Nachricht in einem ersten Zeitschlitz an den Zielknoten (6) zu übertragen;

der Quellknoten (4) dafür konfiguriert ist, eine zweite Nachricht in einem nachfolgenden Zeitschlitz zu übertragen, wenn am Quellknoten (4) eine positive Meldung bezüglich des Empfangs der ersten Nachricht vom Zielknoten (6) empfangen wird; und

wenn am Quellknoten (4) keine Meldung oder eine negative Meldung bezüglich des Empfangs der ersten Nachricht vom Zielknoten (6) empfangen wird, der Quellknoten (4) dafür konfiguriert ist, die erste Nachricht im nachfolgenden Zeitschlitz erneut zu übertragen, oder weder eine erneute Übertragung der ersten Nachricht noch eine Übertragung der zweiten Nachricht im nachfolgenden Zeitschlitz auszuführen.

17. Computerimplementierbares Befehlsprodukt mit computerimplementierbaren Befehlen, die einen programmierbaren Computer veranlassen, als der Kommunikationsknoten nach Anspruch 16 konfiguriert zu werden.

**Revendications**

1. Système de communication sans fil (2) comprenant :

un noeud source (4), un noeud de destination (6) et au moins un noeud relais (8a) configurés pour transmettre et recevoir dans des intervalles de temps synchronisés ;

dans lequel le noeud source (4) est configuré pour transmettre un premier message au noeud de destination (6) dans un premier intervalle de temps ;

dans lequel le noeud de destination (6) est configuré pour recevoir le premier message et pour transmettre une indication indiquant si le premier message a été correctement reçu ;

dans lequel l'au moins un noeud relais (8a) est configuré pour fonctionner en relais par incrément en recevant et stockant le premier message transmis par le noeud source (4),

dans lequel, lorsque l'au moins un noeud relais (8a) ne reçoit pas l'indication en provenance du noeud de destination (6) ou reçoit une indication positive en provenance du noeud de destination (6), l'au moins un noeud relais (8a) est configuré pour ne pas transmettre le premier message ;

dans lequel, lorsque le noeud source reçoit une indication positive en provenance du noeud de destination, le noeud source est configuré pour transmettre un deuxième message dans un intervalle de temps suivant ; et

dans lequel, lorsque aucune indication n'est reçue ou une indication négative est reçue au niveau du noeud source (4) en provenance du noeud de destination (6) et une indication négative est reçue au niveau de l'au moins un noeud relais (8a) en provenance du noeud de destination (6), le noeud source (4) et l'au moins un noeud relais (8a) sont configurés pour participer à un processus de retransmission coopérative dans lequel :

le noeud source (4) est configuré pour retransmettre le premier message dans l'intervalle de temps suivant, ou pour ne réaliser ni retransmission du premier message ni transmission dudit deuxième message dans l'intervalle de temps suivant; et l'au moins un noeud relais (8a) est configuré pour transmettre le premier message dans l'intervalle de temps suivant.

2. Système (2) selon la revendication 1, dans lequel l'indication comprend une réponse ACK/NACK.

3. Système (2) selon la revendication 1 ou la revendication 2, dans lequel le noeud source (4) est configuré pour ne pas transmettre dans l'intervalle de temps suivant lorsqu'une indication négative est reçue ou aucune indication n'est reçue au niveau du noeud source (4) en provenance du noeud de destination (6).

4. Système (2) selon la revendication 1 ou la revendication 2, dans lequel le noeud source (4) est configuré pour retransmettre le premier message dans l'intervalle de temps suivant lorsqu'une indication négative est reçue ou aucune indication n'est reçue au niveau du noeud source (4) en provenance du noeud de destination (6).

**5.** Système (2) selon la revendication 3 ou la revendication 4, comprenant une pluralité de noeuds relais (8a) qui sont configurés pour retransmettre le premier message dans l'intervalle de temps suivant en réponse à l'indication négative reçue en provenance du noeud de destination (6).

**6.** Système (2) selon l'une quelconque des revendications 1 à 5, dans lequel le noeud de destination (6) est configuré pour réaliser une combinaison de rapport maximal sur le premier message et le premier message retransmis reçus au niveau du noeud de destination (6).

**7.** Système (2) selon l'une quelconque des revendications 1 à 6, dans lequel le système de communication (2) comprend un système de communication sans fil selon la norme LTE, et dans lequel le noeud source (4) comprend un eNB, l'au moins un noeud relais comprend un noeud relais LTE, et le noeud de destination (6) comprend un équipement utilisateur.

**8.** Système (2) selon l'une quelconque des revendications 1 à 6, dans lequel le système de communication (2) comprend un système de communication sans fil selon la norme LTE, et dans lequel le noeud source (4) comprend un équipement utilisateur, l'au moins un noeud relais comprend un noeud relais LTE, et le noeud de destination (6) comprend un eNB.

**9.** Système (2) selon l'une quelconque des revendications 1 à 6, dans lequel le système de communication (2) comprend un réseau de radiocommunication cognitive.

**10.** Procédé comprenant :

la synchronisation de transmissions entre un noeud source (4), un noeud de destination (6) et au moins un noeud relais (8a) dans des intervalles de temps synchronisés ;
la transmission (30) d'un premier message du noeud source (4) au noeud de destination (6) dans un premier intervalle de temps ;
la réception (50) et le stockage du message au niveau d'un ou de plusieurs noeuds relais (8a) qui fonctionnent en relais par incrément ;
la transmission, en provenance du noeud de destination (6), d'une indication pour savoir si le premier message a été correctement reçu ;
au niveau des un ou plusieurs noeuds relais (8a), la non-transmission du premier message lorsque aucune indication n'est reçue ou une indication positive est reçue en provenance du noeud de destination (6) au niveau des un ou plusieurs noeuds relais (8a) ;
au niveau du noeud source (4), la transmission d'un deuxième message dans un intervalle de temps suivant lorsque le noeud source (4) reçoit une indication positive en provenance du noeud de destination (6) ; et
dans lequel, lorsque aucune indication n'est reçue ou une indication négative est reçue au niveau du noeud source (4) en provenance du noeud de destination (6) et une indication négative est reçue au niveau de l'au moins un noeud relais (8a) en provenance du noeud de destination (6), le noeud source (4) et l'au moins un noeud relais (8a) participent à un processus de retransmission coopérative dans lequel : le noeud source (4) retransmet le premier message dans l'intervalle de temps suivant, ou ne réalise ni retransmission du premier message ni transmission d'un deuxième message dans l'intervalle de temps suivant ; et l'au moins un noeud relais (8a) transmet le premier message dans l'intervalle de temps suivant.

**11.** Procédé selon la revendication 10, dans lequel l'indication comprend une réponse ACK/NACK

**12.** Procédé selon la revendication 10 ou 11, dans lequel le noeud source (4) transmet le premier message dans un premier intervalle de temps et ne transmet pas le deuxième message dans l'intervalle de temps suivant lorsqu'une indication négative est reçue ou aucune indication n'est reçue au niveau du noeud source (4) en provenance du noeud de destination (6).

**13.** Procédé selon la revendication 10, 11 ou 12, comprenant en outre la non-transmission en provenance du noeud source (4) dans l'intervalle de temps suivant lorsqu'une indication négative est reçue ou aucune indication n'est reçue au niveau du noeud source (4) en provenance du noeud de destination (6).

**14.** Procédé selon l'une quelconque des revendications 10 à 12, comprenant en outre la retransmission (38) du premier message en provenance du noeud source (4) dans l'intervalle de temps suivant lorsqu'une indication négative est reçue ou aucune indication n'est reçue au niveau du noeud source (4) en provenance du noeud de destination (6).

**15.** Procédé selon la revendication 13 ou 14, comprenant en outre la retransmission au niveau d'une pluralité de noeuds relais (8a) dans l'intervalle de temps suivant en réponse à la réception de l'indication négative en provenance du noeud de destination (6).

**16.** Noeud de communication opérationnel en tant que noeud relais (8) et en tant que noeud source (4) dans un réseau de communication (2), le noeud comprenant :

un moyen pour synchroniser des intervalles de temps de transmission et de réception avec un noeud de destination (6) et au moins un autre noeud de communication (4, 8) ;
un moyen pour transmettre un message dans un intervalle de temps ;
un moyen pour recevoir un message dans un intervalle de temps ;
un moyen pour recevoir une indication en provenance du noeud de destination indiquant si le noeud de destination (6) a reçu correctement ou non un message ; et
un moyen de commande configuré pour changer un mode du noeud de communication entre un premier mode et un deuxième mode, dans lequel le noeud de communication est configuré pour fonctionner en tant que noeud relais (8) dans le premier mode et pour fonctionner en tant que noeud source (4) dans le deuxième mode, dans lequel, lorsqu'il fonctionne en tant que noeud relais (8), le noeud relais fonctionne en relais par incrément et :

le moyen pour recevoir un message est configuré pour recevoir et stocker un premier message transmis dans un premier intervalle de temps par un autre noeud de communication destiné au noeud de destination (6) ;
lorsque le noeud relais (8) ne reçoit aucune indication de réception ou reçoit une indication positive de réception du premier message en provenance du noeud de destination (6), le noeud relais (8) est configuré pour ne pas transmettre le premier message ; et
en réponse à la réception d'une indication négative en provenance du noeud de destination (6) indiquant que le noeud de destination n'a pas reçu correctement le premier message, le noeud relais (8) est configuré pour transmettre le premier message dans un intervalle de temps suivant ;
dans lequel, lorsqu'il fonctionne en tant que noeud source (4) :

le moyen pour transmettre un message est configuré pour transmettre un premier message au noeud de destination (6) dans un premier intervalle de temps ;
le noeud source (4) est configuré pour transmettre un deuxième message dans un intervalle de temps suivant lorsqu'une indication positive de réception pour le premier message est reçue au niveau du noeud source (4) en provenance du noeud de destination (6) ; et
lorsque aucune indication n'est reçue ou une indication négative est reçue au niveau du noeud source (4) en provenance du noeud de destination (6) concernant le premier message, le noeud source (4) est configuré pour retransmettre le premier message, dans l'intervalle de temps suivant, ou pour ne réaliser ni retransmission du premier message ni transmission dudit deuxième message dans l'intervalle de temps suivant.

**17.** Produit d'instructions implémentables par ordinateur comprenant des instructions implémentables par ordinateur pour amener un dispositif d'ordinateur programmable à être configuré en tant que noeud de communication selon la revendication 16.

Fig. 1

# Fig. 2

Fig. 3

Fig. 4

Fig. 5

Fig. 6

EP 2 692 071 B1

Destination sends NACK but some links D-R are broken

D sends NACK
R1 supposes ACK

| Packet1 | | | | Packet2 |
| --- | --- | --- | --- | --- |
| S | N | Some Rn | A/N | S |

S waits, some R are retransmitting,
non-empty slot, packet might succeed

EP 2 692 071 B1

Destination sends NACK but some link D-S and some links D-R are broken

D sends NACK
S supposes NACK

D sends NACK
Rn supposes ACK

| Packet1 | | | | Packet2 |
|---|---|---|---|---|
| S | N | Some R₁ | A/N | S |

S waits, some R retransmit,
non-empty slot, packet may succeed

Fig. 7C

Destination sends ACK but some links D-R are broken

Packet1        Packet2

| S | A | S | A/N |  |
|---|---|---|-----|--|

S is transmitting, R are waiting,
non-empty slot, packet succeeds

D sends ACK
Ri supposes ACK

Ri

D

ACK

Rn

S

Fig. 7D

Destination sends ACK but the link D-S and some links D-R are broken

Packet1      Packet2

| S | A | | | S |
|---|---|---|---|---|

S waits, R are retransmitting,
empty slot packet succeeds

ACK

R_i

D

R_n

D sends ACK
R_n supposes ACK

S

D sends ACK
S supposes NACK

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005008947 A1

- GB 1105487 A

**Non-patent literature cited in the description**

- **LANEMAN J. M. et al.** Cooperative diversity in wireless networks: Efficient protocols and outage behaviour. *IEEE Trans. Inform. Theory,* December 2004, vol. 50 (12), 3062-3080

- **LEE D et al.** Amplify-and-forward Cooperative Transmission with Multiple Relays Using Phase Feedback. *IEEE VTC,* September 2006
- **PANAITOPOL D. et al.** An Efficient Cooperative Transmission Scheme Using Multiple Relays Incrementally. *PIRMC,* 2010